# EUROPÄISCHE PATENTSCHRIFT

(11) **EP 3 350 864 B1**
(45) Veröffentlichungstag und Bekanntmachung des Hinweises auf die Patenterteilung: **21.08.2019**
(21) Anmeldenummer: 16770731.4
(22) Anmeldetag: 16.09.2016
(51) Int. Cl.: H01M 8/0206, H01M 8/0247, H01M 8/0254, H01M 8/0265, H01M 8/0267, H01M 8/0271, C25B 9/04, C25B 9/20

(54) **SEPARATORPLATTE FÜR EIN ELEKTROCHEMISCHES SYSTEM**
SEPARATOR PLATE FOR AN ELECTROCHEMICAL SYSTEM
PLAQUE DE SÉPARATION POUR SYSTÈME ÉLECTROCHIMIQUE

(30) Priorität: 18.09.2015 DE 202015104972 U
(43) Veröffentlichungstag der Anmeldung: 25.07.2018
(73) Patentinhaber: REINZ-Dichtungs-GmbH, 89233 Neu-Ulm (DE)
(72) Erfinder: KUNZ, Claudia, 89073 Ulm (DE); WENZEL, Stephan, 89284 Pfaffenhofen (DE); SPEIDEL, André, 88477 Orsenhausen (DE); GLÜCK, Rainer, 89160 Dornstadt (DE); ORUC, Ahmet, 89564 Nattheim (DE)
(74) Vertreter: Pfenning, Meinig & Partner mbB
(86) Internationale Anmeldenummer: PCT/EP2016/072081
(87) Internationale Veröffentlichungsnummer: WO 2017/046405

(56) Entgegenhaltungen:
- DE-A1-102013 208 877
- US-A1- 2009 325 036
- US-A1- 2015 132 680

## Beschreibung

Die Erfindung betrifft eine Separatorplatte für ein elektrochemisches System. Bei dem elektrochemischen System kann es sich beispielsweise um ein Brennstoffzellensystem, einen elektrochemischen Kompressor, einen Befeuchter für ein Brennstoffzellensystem oder um einen Elektrolyseur handeln.

Bekannte elektrochemische Systeme umfassen gewöhnlich eine Vielzahl von Separatorplatten, die in einem Stapel angeordnet sind, so dass je zwei benachbarte Separatorplatten eine elektrochemische Zelle oder eine Befeuchterzelle einschließen. Die Separatorplatten umfassen gewöhnlich jeweils zwei Einzelplatten, die entlang ihrer von den elektrochemischen Zellen bzw. den Befeuchterzellen abgewandten Rückseiten miteinander verbunden sind. Die Separatorplatten können z. B. der elektrischen Kontaktierung der Elektroden der einzelnen elektrochemischen Zellen (z. B. Brennstoffzellen) und/oder der elektrischen Verbindung benachbarter Zellen dienen (Serienschaltung der Zellen). Die Separatorplatten können auch zum Ableiten von Wärme dienen, die in den Zellen zwischen den Separatorplatten entsteht. Solche Abwärme kann etwa bei der Umwandlung elektrischer bzw. chemischer Energie in einer Brennstoffzelle entstehen. Bei Brennstoffzellen kommen häufig Bipolarplatten als Separatorplatten zum Einsatz.

Gewöhnlich weisen die Separatorplatten bzw. die Einzelplatten der Separatorplatten jeweils wenigstens eine Durchgangsöffnung auf. Im Separatorplattenstapel des elektrochemischen Systems bilden die fluchtend oder zumindest abschnittsweise überlappend angeordneten Durchgangsöffnungen der gestapelten Separatorplatten dann Medienkanäle zur Medienzufuhr oder zur Medienableitung. Zum Abdichten der Durchgangsöffnungen bzw. der durch die Durchgangsöffnungen der Separatorplatten gebildeten Medienkanäle weisen bekannte Separatorplatten ferner Sickenanordnungen auf, die jeweils um die Durchgangsöffnung der Separatorplatte herum angeordnet sind.

Die Einzelplatten der Separatorplatte können außerdem Kanalstrukturen zur Versorgung eines aktiven Bereichs der Separatorplatte mit einem oder mehreren Medien und/oder zum Abtransport von Medien aufweisen. Der aktive Bereich kann z. B. eine elektrochemische Zelle oder eine Befeuchterzelle einschließen oder begrenzen. Bei den Medien kann es sich beispielsweise um Brennstoffe (z. B. Wasserstoff oder Methanol), Reaktionsgase (z. B. Luft oder Sauerstoff) oder um ein Kühlmedium als zugeführte Medien und um Reaktionsprodukte und erwärmtes Kühlmedium als abgeführte Medien handeln. Bei Brennstoffzellen werden üblicherweise auf den voneinander abgewandten Oberflächen der Einzelplatten die Reaktionsmedien, d.h. Brennstoff und Reaktionsgase, geführt, während das Kühlmedium zwischen den Einzelplatten geführt wird.

Die Flanken der Sickenanordnung, die um die Durchgangsöffnung der Separatorplatte angeordnet ist, können einen oder mehrere Durchbrüche aufweisen. Diese Durchbrüche dienen dem Herstellen einer Fluidverbindung zwischen der Durchgangsöffnung der Separatorplatte und dem aktiven Bereich der Separatorplatte oder zwischen der Durchgangsöffnung der Separatorplatte und einem zwischen den Einzelplatten der Separatorplatte ausgebildeten Hohlraum. Der Hohlraum dient z. B. zum Durchleiten eines Kühlmediums zwischen den Einzelplatten der Separatorplatte.

Aus der Druckschrift DE10248531A1 oder DE102013208877A1 ist bekannt, dass die Separatorplatte bzw. wenigstens eine der Einzelplatten außerdem einen oder mehrere Leitungskanäle aufweisen kann, die sich an einer Außenseite der Sickenanordnung an die Durchbrüche in der Sickenflanke anschließen und die über die Durchbrüche in der Sickenflanke in Fluidverbindung mit einem Sickeninnenraum stehen. Das Durchführen eines Mediums durch die Sickenanordnung kann mithilfe eines solchen Leitungskanals noch gezielter erfolgen. So kann die Effizienz des elektrochemischen Systems gesteigert werden.

Die Durchbrüche in den Sickenflanken bedingen jedoch notwendigerweise eine Verminderung der mechanischen Stabilität und Elastizität der Sickenanordnung. Dies fällt umso stärker ins Gewicht, je niedriger die Sickenanordnung ausgeführt ist. Zugleich ist eine möglichst geringe Höhe der Sickenanordnung jedoch vorteilhaft, um die Größe des Separatorplattenstapels zu minimieren bzw. bei gleicher Höhe des Separatorplattenstapels mehr Zellen unterzubringen.

Der vorliegenden Erfindung liegt somit die Aufgabe zugrunde, eine Separatorplatte für ein elektrochemisches System zu schaffen, die eine möglichst gute mechanische Stabilität und Kompaktheit und eine möglichst effiziente Medienversorgung des Systems gewährleistet.

Diese Aufgabe wird gelöst durch eine Separatorplatte für ein elektrochemisches System gemäß Anspruch 1. Spezielle Ausführungsformen sind in den Unteransprüchen beschrieben.

Vorgeschlagen wird also eine Separatorplatte für ein elektrochemisches System. Die vorgeschlagene Separatorplatte umfasst wenigstens:
mindestens eine Durchgangsöffnung zur Ausbildung eines Medienkanals zur Medienzufuhr oder zur Medienableitung;
mindestens eine um die mindestens Durchgangsöffnung herum angeordnete Sickenanordnung zum Abdichten der Durchgangsöffnung, wobei wenigstens eine der Flanken der Sickenanordnung wenigstens einen Durchbruch zum Durchleiten eines Mediums durch die Sickenflanke aufweist; und
mindestens einen Leitungskanal, der sich an einer Außenseite der Sickenanordnung an den Durchbruch in der Sickenflanke anschließt und der über den Durchbruch in der Sickenflanke in Fluidverbindung mit einem Sickeninnenraum ist. Z. B. kann die Separatorplatte pro Durchbruch jeweils genau einen Leitungskanal aufweisen, der sich an diesen Durchbruch anschließt.

Dabei ist der Leitungskanal derart ausgebildet, dass eine parallel zur Planflächenebene der Separatorplatte bestimmte Breite des Leitungskanals zur Sickenanordnung hin wenigstens abschnittweise, vorzugsweise in den mittleren 25 Prozent, insbesondere im mittleren Drittel der Erstreckung des Leitungskanals, zunimmt.

Die Breite des Leitungskanals wird dabei vorzugsweise jeweils auf halber Höhe des Leitungskanals bestimmt, wobei die Höhe des Leitungskanals durch den Abstand eines Daches des Leitungskanals zur Planflächenebene der Separatorplatte gegeben ist. Die Breite des Leitungskanals wird ferner vorzugsweise jeweils entlang einer Querschnittsfläche des Leitungskanals bestimmt, die senkrecht zur Längsrichtung des Leitungskanals oder senkrecht zur Medienfließrichtung durch den Leitungskanal ausgerichtet ist. Vorzugsweise schließt sich der Leitungskanal in der Weise an den Durchbruch in der Sickenflanke an, dass die Querschnittsfläche des Leitungskanals am Übergang des Leitungskanals in die Sickenflanke mit der Fläche des Durchbruchs in der Sickenflanke identisch ist und zusammenfällt. Die den Leitungskanal bildenden Kanalwände gehen also typischerweise unmittelbar an den Rändern des Durchbruchs in der Sickenflanke in die Sickenflanke über.

Dadurch, dass die Breite des Leitungskanals zur Sickenanordnung hin wenigstens abschnittweise zunimmt, kann der Durchbruch in der Sickenflanke, an den sich der Leitungskanal an der Außenseite der Sickenanordnung anschließt, in demselben Maße wie der Leitungskanal breiter und zugleich niedriger ausgeführt sein. Gegenüber bekannten Leitungskanälen mit konstanter Breite und konstanter Höhe kann dies die Stabilität und die Elastizität der Sickenanordnung verbessern, ohne dass der Leitungskanalquerschnitt verringert werden muss. Eine effiziente Mediendurchführung durch die Sickenflanke ist somit weiterhin gewährleistet.

Der Leitungskanal kann also derart ausgebildet sein, dass die senkrecht zur Planflächenebene der Separatorplatte bestimmte Höhe des Leitungskanals zur Sickenanordnung hin wenigstens abschnittweise abnimmt. Insbesondere kann der Leitungskanal derart ausgebildet sein, dass sich die Querschnittsfläche des Leitungskanals wenigstens entlang der mittleren 25 Prozent, vorzugsweise wenigstens entlang des mittleren Drittels der Erstreckung des Leitungskanals höchstens um 25 Prozent, vorzugsweise um höchstens um 20 Prozent ändert, insbesondere höchstens um 15 Prozent.

Gewöhnlich erstreckt sich der Leitungskanal von einem von der Sickenanordnung abgewandten Ende des Leitungskanals, das durch einen Einlass oder einen Auslass des Leitungskanals gegebenen ist, bis zum Durchbruch in der Sickenflanke. Der Einlass oder Auslass des Leitungskanals kann dabei beispielsweise durch eine Öffnung in der Separatorplatte oder an einer Innenkante beispielsweise einer Durchgangsöffnung gebildet werden. Z. B. kann das von der Sickenanordnung abgewandte Ende des Leitungskanals durch einen Einlass oder Auslass des Leitungskanals gegeben sein, der an einer Innenkante der Separatorplatte angeordnet ist, welche die zuvor genannte Durchgangsöffnung in der Separatorplatte begrenzt oder einfasst. Sind der Einlass oder Auslass eines Leitungskanals nicht als Öffnung oder an einer Innenkante ausgebildet, können sie auch von Übergängen zu anderen Strukturen gebildet sein. Diese Enden der Leitungskanäle sind vorzugsweise mit deutlichen Radien versehen, die dem Übergang in die benachbarte Struktur dienen. Deshalb wird vorzugsweise bei erfindungsrelevanten Höhen- und Breitenbetrachtungen nur die mittlere Hälfte, vorzugsweise das mittlere Drittel oder die mittleren 25 Prozent der Erstreckung des Leitungskanals betrachtet.

Der Leitungskanal kann derart ausgebildet sein, dass die Breite des Leitungskanals entlang der Erstreckung des Leitungskanals monoton zunimmt, vorzugsweise streng monoton. Dies gilt insbesondere für die der Sickenflanke unmittelbar benachbarten 60 Prozent der Länge des Leitungskanals. Die Breite des Leitungskanals kann entlang der Erstreckung des Leitungskanals insbesondere linear zunehmen. Z. B. kann der Leitungskanal derart ausgebildet sein, dass die Breite des Leitungskanals entlang der Erstreckung des Leitungskanals zur Sickenanordnung hin wenigstens um 10 Prozent zunimmt, vorzugsweise wenigstens um 20 Prozent. Auch dies gilt insbesondere für die der Sickenflanke unmittelbar benachbarten 60 Prozent der Länge des Leitungskanals.

Alternativ oder zusätzlich kann die Höhe des Leitungskanals entlang der Erstreckung des Leitungskanals monoton abnehmen, vorzugsweise streng monoton. Dies gilt insbesondere für das mittlere Drittel der Länge des Leitungskanals. Die Höhe des Leitungskanals kann entlang der Erstreckung des Leitungskanals insbesondere linear abnehmen. Z. B. kann der Leitungskanal derart ausgebildet sein, dass die Höhe des Leitungskanals entlang der Erstreckung des Leitungskanals zur Sickenanordnung hin wenigstens um 10 Prozent abnimmt, vorzugsweise wenigstens um 20 Prozent.

Um eine ausreichende mechanische Stabilität und wenig veränderte Elastizität der Sickenanordnung im Bereich des Durchbruchs in der Sickenflanke zu gewährleisten, kann der Durchbruch senkrecht zur Planflächenebene der Separatorplatte bis zu einer Höhe reichen, die bis zu 80 Prozent, vorzugsweise nur bis zu 70 Prozent der Höhe der Sickenanordnung beträgt. Vorzugsweise beziehen sich die Höhen dabei jeweils auf die Sickenanordnung im unverpressten Zustand und sind jeweils durch den Abstand von der Planflächenebene der Einzelplatte gegeben.

Ein Einlass oder Auslass des Leitungskanals am von der Sickenanordnung abgewandten Ende des Leitungskanals kann senkrecht zur Planflächenebene der Einzelplatte bis zu einer Höhe reichen, die höchstens 90 Prozent, vorzugsweise höchstens 85 Prozent, vorzugsweise höchstens 75 Prozent der Höhe der Sickenanordnung beträgt. Wiederum sind die Höhenangaben dabei vorzugsweise auf die Sickenanordnung im unverpressten Zustand bezogen und jeweils durch den Abstand von der Planflächenebene der Einzelplatte gegeben. Normalerweise ist die Höhe des Leitungskanals am von der Sickenanordnung abgewandten Ende des Leitungskanals jedoch stets größer als die Höhe des Durchbruchs in der Sickenanordnung.

Der Leitungskanal kann wenigstens abschnittweise, z. B. wenigstens entlang des mittleren Drittels der Erstreckung des Leitungskanals, einen rechteckigen, trapezförmigen oder wenigstens teilweise abgerundeten Querschnitt aufweisen.

Zur Verbesserung der mechanischen Stabilität und Elastizität der Sickenanordnung kann die Sickenanordnung derart ausgebildet sein, dass sie parallel zur Planflächenebene der Platte wenigstens abschnittweise, insbesondere in solchen Bereichen, die makroskopisch betrachtet eine geradlinige Erstreckung aufweisen, wellenartig verläuft. Hierdurch ergibt sich eine vergleichbare Stabilität und Elastizität dieser Bereiche mit solchen Bereichen, die bereits aufgrund der Gesamtrichtung der Sicke eine Krümmung aufweisen, etwa in Eckbereichen. Durch den wellenartigen Verlauf kann dann eine Wellenlänge gegeben sein. Vorzugsweise erstreckt sich wenigstens ein wellenartig verlaufender Abschnitt der Sickenanordnung über wenigstens zwei Wellenlängen.

Nur in den sich unmittelbar an einen Wendepunkt des wellenartigen Verlaufs der Sickenanordnung anschließenden Bereichen herrschen an beiden Flanken der Sickenanordnung vergleichbare Verhältnisse, insbesondere auch bezüglich Elastizität und Stabilität. Es ist daher vorteilhaft, wenn der Durchbruch in der Sickenflanke, an den sich der Leitungskanal an der Außenseite der Sickenflanke anschließt, im Bereich eines Wendepunktes des wellenartig verlaufenden Abschnitts der Sickenanordnung angeordnet oder ausgebildet ist, z. B. insbesondere in denjenigen wellenartig verlaufenden Abschnitten der Sickenanordnung, in denen die Sickenanordnung makroskopisch gerade verläuft. Soll hingegen eine maximale Länge des Leitungskanals mit vielen Gestaltungsmöglichkeiten oder eine minimale Länge des Leitungskanals mit einem geringen Druckverlust erzielt werden, so ist der Durchbruch in der Sickenflanke bevorzugt an einem (vom Leitungskanal aus gesehen) Minimum bzw. Maximum des wellenartig verlaufenden Abschnitts der Sickenanordnung angeordnet bzw. ausgebildet, also z. B. dort wo eine Amplitude der Auslenkung des wellenartig verlaufenden Abschnitts der Sickenanordnung maximal ist.

Die Separatorplatte kann als Bipolarplatte mit zwei miteinander verbundenen Einzelplatten ausgebildet sein, wobei die Sickenanordnung und der Leitungskanal in wenigstens einer der Einzelplatten ausgebildet sind. Die Separatorplatte und/oder die Einzelplatten kann/können aus Metall gebildet sein, vorzugsweise aus Edelstahl. Zur Verbesserung der Leitfähigkeit und zur Reduktion des Korrosionsrisikos können die Einzelplatten zumindest abschnittsweise beschichtet sein. Eine senkrecht zur Planflächenebene der Separatorplatte oder der Einzelplatten bestimmte Dicke der Einzelplatten kann jeweils zwischen 50 µm und 150 µm, vorzugsweise zwischen 70 µm und 110 µm betragen. Die Sickenanordnung, der Leitungskanal und die Einzelplatte, in der die Sickenanordnung und der Leitungskanal ausgebildet sind, können einteilig ausgebildet sein. Z. B. können die Sickenanordnung und der Leitungskanal in die Einzelplatte eingeformt, insbesondere eingeprägt sein.

Wenigstens eine der Flanken der Sickenanordnung kann eine Vielzahl von Durchbrüchen aufweisen, an die sich an der Außenseite der Sickenanordnung jeweils ein Leitungskanal der zuvor beschriebenen Art anschließt, der sich zur Sickenanordnung hin wenigstens abschnittweise verbreitert. Zwischen unmittelbar benachbarten Leitungskanälen oder wenigstens zwischen einigen der einander unmittelbar benachbarten Leitungskanäle kann im Bereich der Separatorplatte zwischen den unmittelbar benachbarten Leitungskanälen jeweils eine stoffschlüssige Verbindung zwischen den Einzelplatten ausgebildet sein. Die stoffschlüssige Verbindung kann eine Lötverbindung, eine Klebeverbindung oder eine Schweißverbindung sein, insbesondere eine Laserschweißverbindung. Die Verbindung kann über eine durchgängige Linie oder einzelne kurze Linien oder Punkte realisiert werden. Durch diese stoffschlüssigen Verbindungen kann verhindert werden, dass die Einzelplatten der Sickenanordnung in einem der Sickenanordnung benachbarten Bereich der Separatorplatte senkrecht zur Planflächenebene der Separatorplatte oder der Einzelplatten auseinanderklaffen, wenn die Separatorplatten des Stapels senkrecht zu den Planflächenebenen der Separatorplatten entlang der Sickenanordnungen verpresst werden.

Die miteinander verbundenen Einzelplatten der Separatorplatte können derart ausgebildet und angeordnet sein, dass sie einen zwischen den Einzelplatten angeordneten Hohlraum zum Durchführen eines Kühlmediums einschließen. Dieser Hohlraum kann mit dem Sickeninnenraum in Fluidverbindung sein.

Wenigstens eine der Einzelplatten kann auf ihrer von der anderen Einzelplatte abgewandten Oberfläche eine Struktur zur Führung eines Reaktionsmediums aufweisen. Die Struktur kann z. B. eine Vielzahl von Kanälen umfassen, die in die Einzelplatte eingeprägt sind. Eine Kanalstruktur im aktiven Bereich der Separatorplatte wird auch als Flow Field bezeichnet. Zwischen dem Flow Field und der Durchgangsöffnung in der Separatorplatte kann die Einzelplatte eine weitere Kanalstruktur aufweisen, die als Verteilbereich bezeichnet wird. Diese Struktur zur Führung des Reaktionsmediums ist üblicherweise an der von der Durchgangsöffnung in der Separatorplatte abgewandten Seite der Sickenanordnung angeordnet. Die Struktur kann über mindestens eine Öffnung in der Einzelplatte mit dem Sickeninnenraum in Fluidverbindung sein, z. B. über einen Durchbruch in der Sickenflanke und einen sich an den Durchbruch anschließenden Leitungskanal der zuvor beschriebenen Art. Das Reaktionsmedium wird also in der oben genannten Struktur vom Ausgang bzw. bis zum Eingang des Leitungskanals, nämlich von bzw. zur oben genannten Öffnung auf einer Außenoberfläche der Separatorplatte geführt, während es im Leitungskanal zwischen den Einzelplatten, d.h. im Innenraum der Separatorplatte, geführt wird.

Der Durchbruch in der Sickenanordnung und der sich an den Durchbruch anschließende Leitungskanal der zuvor beschriebenen Art können an einer von der Durchgangsöffnung der Separatorplatte abgewandten Flanke und/oder an einer der Durchgangsöffnung der Separatorplatte zugewandten Flanke der Sickenanordnung angeordnet sein.

Die Sickenanordnung kann wenigstens abschnittweise derart ausgebildet sein, dass die Sickenflanken mit einer senkrecht zur Planflächenebene der Separatorplatte ausgerichteten Lotrichtung jeweils einen Winkel von weniger als 70 Grad, vorzugsweise von weniger als 60 Grad, besonders vorzugsweise von weniger als 50 Grad einschließen. Das Sickendach kann zusätzlich eine konvexe Wölbung aufweisen. Bei dieser Ausgestaltung der Sickenanordnung haben die Sickenflanken eine hohe Steifigkeit, während das Sickendach elastisch und verformbar ist, insbesondere beim Verpressen der Sickenanordnung.

Eine Höhe der Sickenanordnung kann im unverpressten Zustand weniger als 800 µm, weniger als 600 µm, weniger als 500 µm, weniger als 450 µm oder weniger als 400 µm betragen. Wie zuvor ist die Höhe der Sickenanordnung durch den Abstand des Sickendaches von der Planflächenebene der Separatorplatte bzw. der jeweiligen Einzelplatte gegeben.

Vorgeschlagen wird außerdem ein elektrochemisches System mit einer Vielzahl von Separatorplatten der hier vorgeschlagenen Art. Das elektrochemische System kann z. B. ein Brennstoffzellensystem, ein elektrochemischer Kompressor, ein Befeuchter für ein Brennstoffzellensystem oder ein Elektrolyseur sein. Typischerweise sind die Separatorplatten des elektrochemischen Systems gestapelt angeordnet und derart ausgebildet, dass die Durchgangsöffnungen der Separatorplatten wenigstens einen Medienkanal bilden, der zur Zufuhr eines Mediums oder zur Ableitung eines Mediums aus dem Stapel eingerichtet ist.

Ausführungsbeispiele der Erfindung sind in den Zeichnungen dargestellt und werden anhand der nachfolgenden Beschreibung näher erläutert. Auch wenn Ecken teilweise ohne Radien dargestellt sind, weisen sie in der Praxis immer zumindest kleine Radien auf. Im Folgenden werden einige Beispiele erfindungsgemäßer Separatorplatten gegeben. Dabei werden jeweils in Verbindung miteinander eine Vielzahl von vorteilhaften Merkmalen einer erfindungsgemäßen Separatorplatte dargestellt. Diese einzelnen optionalen Merkmale können jedoch nicht nur gemeinsam sondern auch einzeln oder in Kombination mit anderen optionalen Merkmalen aus anderen Beispielen die vorliegende Erfindung weiterbilden. Für gleiche oder ähnliche Elemente werden im Folgenden gleiche oder ähnliche Bezugszeichen verwendet, so dass deren Beschreibung teilweise nicht wiederholt wird. Es zeigt:
- Fig. 1: ein Brennstoffzellensystem mit einer Vielzahl von gestapelten Separatorplatten in perspektivischer Darstellung;
- Fig. 2: perspektivisch zwei unmittelbar benachbarte Separatorplatten des Stapels aus Fig. 1 und eine dazwischen angeordnete Membranelektrodeneinheit;
- Fig. 3: ein weiteres Ausführungsbeispiel einer Separatorplatte in einer Draufsicht;
- Fig. 4a: perspektivisch eine Durchführung durch eine Sickenanordnung einer Separatorplatte mit an die Sickenanordnung sich anschließenden Leitungskanälen gemäß dem Stand der Technik;
- Fig. 4b: eine Schnittdarstellung der Sickendurchführung aus Fig. 4a;
- Fig. 4c: eine Schnittdarstellung einer weiteren Sickendurchführung mit Leitungskanälen gemäß dem Stand der Technik;
- Fig. 5: eine Ausführungsform einer Sickendurchführung mit erfindungsgemäßen Leitungskanälen in einer Draufsicht;
- Fig. 6-7: weitere Ausführungsformen einer Sickendurchführung mit erfindungsgemäßen Leitungskanälen in einer Draufsicht;
- Fign. 8a-f: Schnittdarstellungen erfindungsgemäßer Leitungskanäle; sowie
- Fign. 9a-e: Schnittdarstellungen erfindungsgemäßer Leitungskanäle an jeweils zwei unterschiedlichen Stellen desselben Leitungskanals.

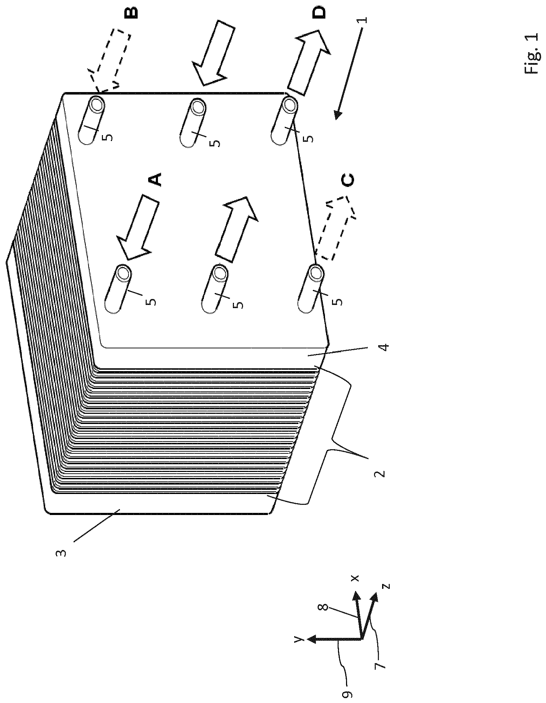

Fig. 1 zeigt ein erfindungsgemäßes elektrochemisches System 1 mit einem Stapel 2 von baugleichen Separatorplatten, die entlang einer z-Richtung 7 gestapelt und zwischen zwei Endplatten 3, 4 eingespannt sind. Die Separatorplatten sind hier als Bipolarplatten ausgebildet und umfassen jeweils zwei miteinander verbundene Einzelplatten. Im vorliegenden Beispiel handelt es sich bei dem System 1 um einen Brennstoffzellenstapel. Je zwei benachbarte Bipolarplatten des Stapels 2 schließen also zwischen sich eine elektrochemische Zelle ein, die zur Umwandlung von chemischer Energie in elektrische Energie ausgebildet ist. Bei alternativen Ausführungsformen kann das System 1 ebenso als Elektrolyseur, elektrochemischer Kompressor oder als Befeuchter für ein Brennstoffzellensystem ausgebildet sein. Bei diesen elektrochemischen Systemen werden ebenfalls Separatorplatten verwendet. Der Aufbau dieser Separatorplatten entspricht dem Aufbau der hier näher erläuterten Bipolarplatten, auch wenn sich die auf bzw. durch die Separatorplatten geführten Medien unterscheiden.

Die z-Achse 7 spannt zusammen mit einer x-Achse 8 und einer y-Achse 9 ein rechtshändiges kartesisches Koordinatensystem auf. Die Endplatte 4 weist eine Vielzahl von Ports 5 auf, über die dem System 1 Medien zuführbar und über die Medien aus dem System 1 abführbar sind. Diese dem System 1 zuführbaren und aus dem System 1 abführbaren Medien können z. B. Brennstoffe wie molekularen Wasserstoff oder Methanol, Reaktionsgase wie Luft oder Sauerstoff, Reaktionsprodukte wie Wasserdampf oder an Sauerstoff verarmte Luft, oder Kühlmedien wie Wasser und/oder Glykol umfassen.

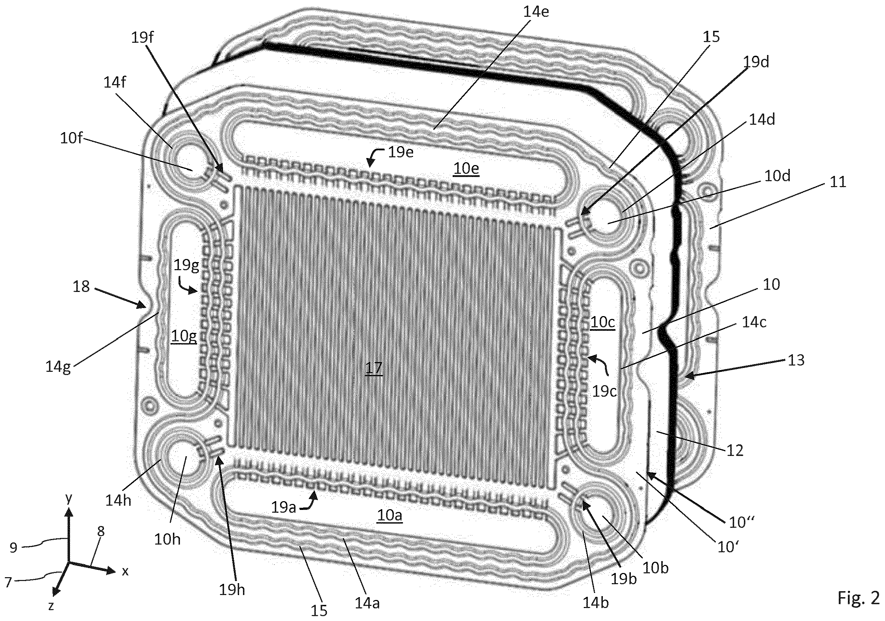

Fig. 2 zeigt zwei unmittelbar benachbarte Separatorplatten 10, 11 des Stapels 2 aus Fig. 1. Hier und im Folgenden sind wiederkehrende Merkmale dabei jeweils mit denselben Bezugszeichen bezeichnet. Die Separatorplatten 10, 11 sind identisch ausgebildet. Im Folgenden wird daher nur die Separatorplatte 10 im Detail beschrieben. Sie steht damit beispielhaft für die Separatorplatten des Stapels 2.

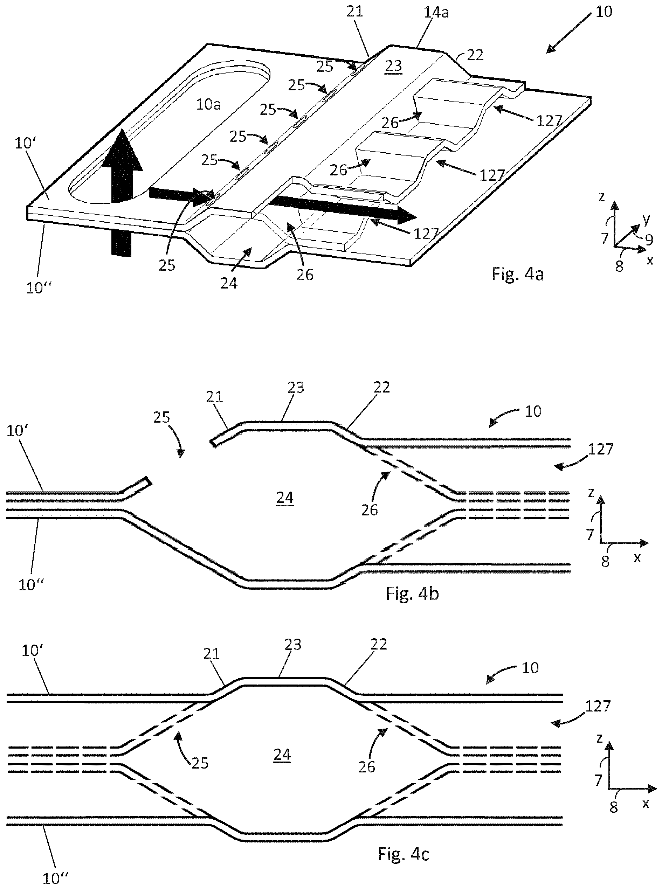

Die Planflächenebenen der Separatorplatte 10 ist entlang der x-y-Ebene ausgerichtet. Hier ist die Separatorplatten 10 aus zwei zusammengefügten metallischen Einzelplatten 10', 10" gebildet (siehe auch Fig. 4). In Fig. 2 ist jedoch nur die dem Betrachter zugewandte erste Einzelplatten 10' der Separatorplatte 10 sichtbar. Die Einzelplatten 10', 10" der Separatorplatte 10 sind aus Edelstahlblechen gefertigt, die z. B. jeweils eine senkrecht zur Planflächenebene der Einzelplatten bestimmte Dicke von 80 µm haben. Die Einzelplatten 10', 10" können zur Ausbildung der Separatorplatte 10 entlang ihrer einander zugewandten Rückseiten miteinander verschweißt, insbesondere abschnittsweise miteinander verschweißt, verlötet oder verklebt sein. Z. B. können die Einzelplatten 10', 10" durch Laserschweißverbindungen verbunden sein.

Zwischen den Separatorplatten 10, 11 ist eine Membranelektrodeneinheit (membrane electrode assembly, MEA) 12 angeordnet. Die MEA 12 kann eine Polymerelektrolytmembran (PEM) sowie eine oder mehrere Gasdiffusionslagen (GDL) aufweisen. Die GDL sind üblicherweise zu den Separatorplatten 10, 11 hin orientiert und z. B. als Kohlenstoffvlies ausgebildet. Die einander zugewandten Seiten der Separatorplatten 10, 11 schließen im verpressten Zustand eine elektrochemische Zelle 13 ein. Bei Befeuchtern für Brennstoffzellensysteme wird die Zelle 13 von einer im Wesentlichen gasundurchlässigen aber wasserdurchlässigen Membran, die von Stützmedien gestützt sein kann, sowie von mindestens einem, vorzugsweise beidseitig von je einem Diffusionsmedium aus einem Textil- oder Kohlenstoffvlies gebildet.

Die Separatorplatte 10 weist eine Vielzahl von Durchgangsöffnungen 10a-h, auf. Die MEA 12 weist entsprechende Durchgangsöffnungen auf, die mit den Durchgangsöffnungen 10a-h der Separatorplatte 10 und mit entsprechenden Durchgangsöffnungen der übrigen Separatorplatten des Stapels 2 fluchten, so dass die Durchgangsöffnungen nach dem Verpressen des Stapels 2 Medienkanäle bilden, die jeweils mit einem der Ports 5 aus Fig. 1 in Fluidverbindung sind. Diese Medienkanäle dienen der Zufuhr von Medien in das elektrochemische System 1 und der Ableitung von Medien aus dem elektrochemischen System 1.

Zum Abdichten der Durchgangsöffnungen 10a-h bzw. zum Abdichten der von den Durchgangsöffnungen 10a-h gebildeten Medienkanäle sind in der Separatorplatte 10 Sickenanordnungen ausgebildet, die um die Durchgangsöffnungen 10a-h herum angeordnet sind. So weist die von der Separatorplatte 11 abgewandte erste Einzelplatte 10' der Separatorplatte 10 um die Durchgangsöffnungen 10a-h herum Sickenanordnungen 14a-h auf. Die Sickenanordnungen 14a-h umschließen die Durchgangsöffnungen 10a-h jeweils vollständig. Die der Separatorplatte 11 zugewandte und in Fig. 2 verdeckte zweite Einzelplatte 10" der Separatorplatte 10 weist um die Durchgangsöffnungen 10a-h herum entsprechende Sickenanordnungen auf. Eine zusätzliche Sickenanordnung 15 der Separatorplatte 10 umschließt die Durchgangsöffnungen 10a-b, 10d-f und 10h vollständig.

Die Sickenanordnungen der Separatorplatte 10 sind hier jeweils einstückig mit den Einzelplatten 10', 10" ausgebildet. Üblicherweise sind die Sickenanordnungen der Einzelplatten 10', 10" in die Einzelplatten eingeformt, insbesondere eingeprägt. Senkrecht zur Planflächenebene der Einzelplatten 10', 10" haben die in den Einzelplatten ausgebildeten Sickenanordnungen im unverpressten Zustand jeweils eine Höhe von nur 450 µm oder sogar von nur 400 µm. Die Höhe der Sicke bezeichnet dabei jeweils den Abstand des höchsten Punktes des Sickendaches zur Planflächenebene der jeweiligen Einzelplatte auf der zum Sickendach weisenden Oberfläche. Diese außerordentlich geringe Sickenhöhe trägt vorteilhaft zur Kompaktheit des Stapels 2 des Systems 1 bei.

In Fig. 2 ist ferner zu erkennen, dass die erste Einzelplatte 10' der Separatorplatte 10 an ihrer von der zweiten Einzelplatte 10" der Separatorplatte 10 abgewandten Vorderseite eine Struktur 17 zur Führung von Reaktionsmedium aufweist. Die Struktur 17 umfasst eine Vielzahl von Kanälen, die in die Einzelplatte 10' eingeprägt sind. Die Struktur 17 ist allseits vollständig von der Sickenanordnung 15 umschlossen, so dass die Sickenanordnung 1 die Struktur 17 gegenüber der Umgebung abdichtet. Die Struktur 17 ist Teil eines aktiven Bereichs der Einzelplatte 10'. Dieser aktive Bereich begrenzt eine weitere elektrochemische Zelle, die zwischen der Separatorplatte 10 und einer der Separatorplatte 10 in der positiven z-Richtung 7 unmittelbar benachbarten weiteren Separatorplatte angeordnet ist, die in Fig. 2 nicht dargestellt ist. Die zweite Einzelplatte 10" der Separatorplatte 10 weist an ihrer von der ersten Einzelplatte 10' abgewandten Vorderseite eine der Struktur 17 entsprechende Struktur zum Führen von Reaktionsmedium auf.

Die Einzelplatten 10', 10" sind derart ausgebildet und angeordnet, dass sie zwischen sich einen Hohlraum 18 zum Durchführen eines Kühlmediums einschließen. Der Hohlraum 18 ist insbesondere derart zwischen den Einzelplatten 10', 10" angeordnet, dass mittels des durch den Hohlraum 18 geführten Kühlmediums Wärme aus den aktiven Bereichen der Einzelplatten 10', 10" ableitbar ist.

Die Einzelplatten 10', 10" weisen ferner Durchführungen 19a-h auf, die zum dosierten Durchführen oder Durchleiten von Medien (z. B. Brennstoffe, Reaktionsgase, Reaktionsprodukte oder Kühlmedium) durch die Sickenanordnungen 14a-h, 15 ausgebildet sind. Einige der Durchführungen 19a-h, nämlich die Durchführungen 19c und 19g, stellen eine Fluidverbindung zwischen den Durchgangsöffnungen 10c und 10g (bzw. den durch diese gebildeten Medienkanälen) und dem Hohlraum 18 zwischen den Einzelplatten 10', 10" her. Einige der Durchführungen, nämlich die Durchführungen 19a und 19e, stellen eine Fluidverbindung zwischen den Durchgangsöffnungen 10a und 10e (bzw. den durch diese gebildeten Medienkanälen) und dem dem Betrachter zugewandten Flowfield 17 des aktiven Bereichs der Einzelplatten 10', 10" der Separatorplatte 10 her. Die übrigen Durchführungen 19b, 19d, 19f und 19h stellen eine Fluidverbindung zwischen den Durchgangsöffnungen 10b, 10d, 10f und 10h (bzw. den durch diese gebildeten Medienkanälen) und dem vom Betrachter abgewandten Flowfield 17 des aktiven Bereichs der Einzelplatten 10', 10" der Separatorplatte 10 her. Details der Durchführungen 19a-h werden anhand der nachfolgenden Figuren erläutert.

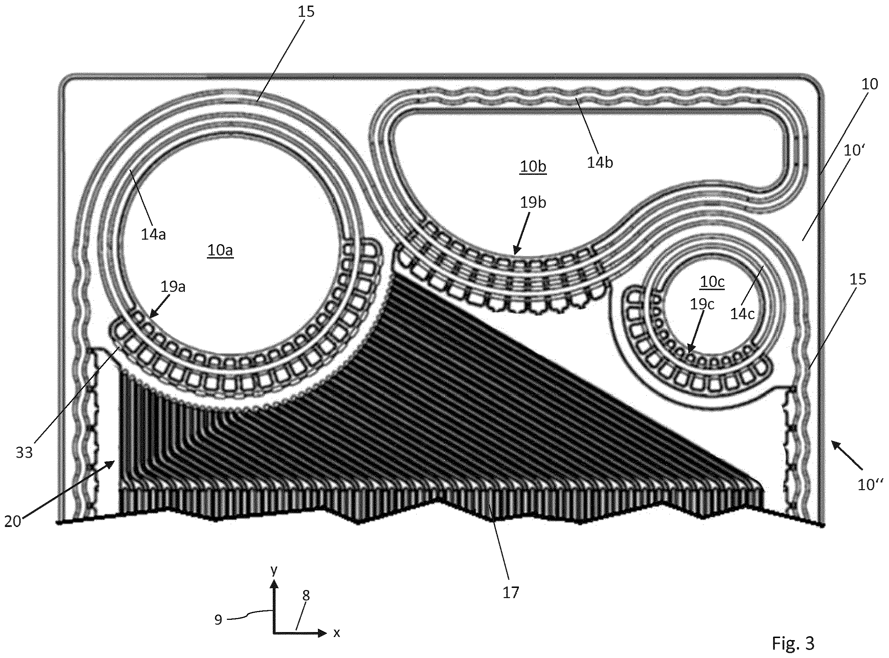

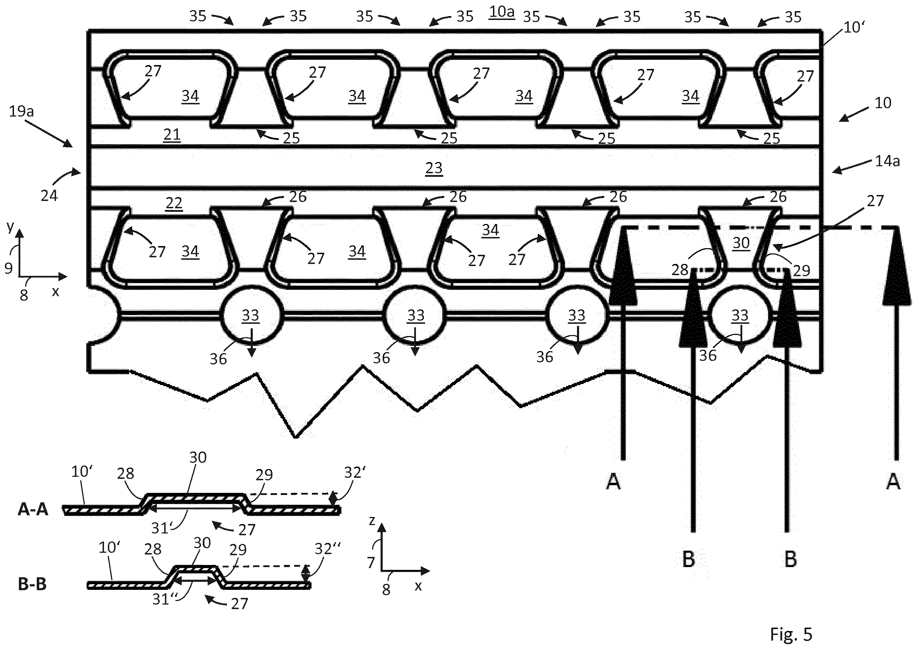

Fig. 3 zeigt eine abgewandelte Ausführungsform der Separatorplatte 10 mit den zusammengefügten metallischen Einzelplatten 10', 10". Dem Betrachter zugewandt ist die Vorderseite der ersten Einzelplatte 10'. Erkennbar sind die Durchgangsöffnungen 10a-c in der Separatorplatte 10 und die zum Abdichten der Durchgangsöffnungen 10a-c um die Durchgangsöffnungen 10a-c herum angeordneten Sickenanordnungen 14a-c, die in die erste Einzelplatte 10' eingeprägt sind. Die Sickenanordnung 15 zum Abdichten des aktiven Bereichs der ersten Einzelplatte 10' ist abschnittweise dargestellt. Die Ausführungsform der Separatorplatte 10 gemäß Fig. 3 weist zudem eine Verteilerstruktur 20 auf. Diese umfasst eine Vielzahl von in die Vorderseite der Einzelplatte 10' eingeprägten Kanälen und stellt eine Fluidverbindung zwischen der Durchgangsöffnung 10a und dem aktiven Bereich der Einzelplatte 10' her, der sich in Fig. 3 am unteren Bildrand an die Verteilerstruktur 20 anschließt. Die Sickenanordnungen 14a-c weisen wiederum Durchführungen 19a-c zum Durchführen von Medien durch die Sickenanordnungen 14a-c auf. Es wird deutlich, dass das Medium der Durchgangsöffnung 10b - es handelt sich dabei insbesondere um Kühlmedium - sowohl die Sicke 14b als auch die Sicke 15 queren muss. Dieses Medium wird durchgängig auf der vom Betrachter abgewandten Seite der Einzelplatte 10' geführt. Das aus der Durchgangsöffnung 10a zwischen den Einzelplatten 10', 10" und durch die Durchführung 19a quer zur Sickenanordnung 14a geführte Medium tritt über die Öffnung 33 (siehe z. B. Fign. 5 bis 7) in die dem Betrachter zugewandte Verteilstruktur 20 ein. Das aus der nicht sichtbaren Verteilstruktur auf der gegenüberliegenden Oberfläche der Separatorplatte 10 abgeführte Medium tritt durch eine in der zweiten Einzelplatte 10" ausgebildete Öffnung in einen Leitungskanal zwischen den Einzelplatten 10' und 10" ein und quert die Sicke 14c über die Durchführung 19c und fließt weiter in die Durchgangsöffnung 10c.

Fig. 4a zeigt einen Ausschnitt der Separatorplatte 10 in perspektivischer Darstellung. Die in die erste Einzelplatte 10' eingeprägte Sickenanordnung 14a weist zwei Sickenflanken 21, 22 sowie ein Sickendach 23 auf. Zwischen den Sickenflanken 21, 22 und dem Sickendach 23 ist ein Sickeninnenraum 24 angeordnet, der von den Sickenflanken 21, 22 und dem Sickendach 23 begrenzt wird. Die der Durchgangsöffnung 10a zugewandte Sickenflanke 21 weist eine Vielzahl von Durchbrüchen 25 zum Durchleiten eines Mediums durch die Sickenflanke 21 auf. Über die Durchbrüche 25 ist die Durchgangsöffnung 10a in Fluidverbindung mit dem Sickeninnenraum 24. Die von der Durchgangsöffnung 10a abgewandte Sickenflanke 22 weist Durchbrüche 26 zum Durchleiten eines Mediums durch die Sickenflanke 22 auf. An der von der zweiten Einzelplatte 10" abgewandten Außenseite der Sickenanordnung 14a schließen sich an die Durchbrüche 26 nicht erfindungsgemäße Leitungskanäle 127 an, die über die Durchbrüche 26 mit dem Sickeninnenraum 24 in Fluidverbindung sind. Ein im Medienkanal 10a geführtes Medium kann somit über die Durchbrüche 25, 26 und die Kanäle 127 durch die Sickenanordnung14a hindurchgeführt und z. B. gezielt in den aktiven Bereich der Einzelplatte 10' geleitet werden, wie anhand der Pfeile angedeutet ist. Die nicht erfindungsgemäßen Leitungskanäle 127 haben eine konstante Breite, wobei die Breite der Leitungskanäle 127 in Fig. 4a jeweils parallel zur y-Richtung 9 auf halber höher der Leitungskanäle 127 bestimmt wird. Fig. 4b zeigt eine Schnittdarstellung der Sickenanordnung 14a gemäß Fig. 4a, wobei die Schnittebene entlang derx-z-Ebene ausgerichtet ist und in Längsrichtung durch einen der nicht erfindungsgemäßen Leitungskanäle 127 verläuft. Fig. 4c zeigt eine Schnittdarstellung einer abgewandelten Ausführungsform der Sickenanordnung 14a, bei der sich nicht erfindungsgemäße Leitungskanäle 127 an beide Sickenflanken 21, 22 anschließen.

Um den Stapel 2 der Separatorplatten des Systems 1 möglichst kompakt zu gestalten, ist es wünschenswert, die Sickenanordnung 14a und die übrigen Sickenanordnungen der Separatorplatte 10 möglichst flach auszubilden. In diesem Fall können die Durchbrüche 24, 26 in den Sickenflanken 21, 22 jedoch die Stabilität und Elastizität und damit die Dichtwirkung der Sickenanordnung 14a beeinträchtigen. Dem könnte ggf. durch eine Verkleinerung der Durchbrüche 25, 26 abgeholfen werden. Eine solche Verkleinerung hätte aber eine ebenfalls ungewünschte Verringerung des Medienstromes durch die Sickenanordnung zur Folge.

Eine erfindungsgemäße Ausgestaltung der Durchführungen 19a-h durch die Sickenanordnungen 14a-h, 15 gemäß den Fign. 2 und 3, die einen genügend großen Medienstrom durch die Sickenanordnungen 14a-h, 15 gewährleistet, ohne die Stabilität und die Elastizität der Sickenanordnungen 14a-h, 15 zu beeinträchtigen, ist im Folgenden anhand der Fign. 5-9 für die Sickendurchführung 19a beispielhaft dargestellt.

Fig. 5 zeigt einen Ausschnitt der von der zweiten Einzelplatte 10" abgewandten Vorderseite der ersten Einzelplatte 10' der Separatorplatte 10. Dargestellt ist insbesondere ein Abschnitt der Sickenanordnung 14a, die in die erste Einzelplatte 10' eingeprägt ist. Die Einzelplatte 10' und die Sickenanordnung 14a sind einstückig ausgebildet. Die Sickenanordnung 14a umfasst eine der Durchgangsöffnung 10a am oberen Bildrand zugewandte erste Sickenflanke 21, eine von der Durchgangsöffnung 10a abgewandte zweite Sickenflanke 22 sowie ein die Sickenflanken 21, 22 verbindendes Sickendach 23. Die erste Sickenflanke 21 weist eine Vielzahl von Durchbrüchen 25 zum Durchleiten eines Mediums durch die erste Sickenflanke 21 auf. Die zweite Sickenflanke weist eine Vielzahl von Durchbrüchen 26 zum Durchleiten eines Mediums durch die zweite Sickenflanke 22 auf.

Über die Durchbrüche 25 ist die Durchgangsöffnung 10a am oberen Bildrand in Fluidverbindung mit dem von den Sickenflanken 21, 22 und dem Sickendach 23 eingeschlossenen oder begrenzten Sickeninnenraum 24. So kann ein Medium (z. B. ein Brennstoff wie molekularer Wasserstoff, ein Reaktionsgas wie molekularer Sauerstoff, ein Reaktionsprodukt wie Wasserdampf oder ein Kühlmedium) von der Durchgangsöffnung 10a zwischen den Einzelplatten 10', 10" über die Durchbrüche 25 in den Sickeninnenraum 24 geführt werden. In Fig. 5 ist dies durch Pfeile 35 angedeutet. Gegebenenfalls kann der Medienfluss auch in der umgekehrten Richtung erfolgen, also entgegen der durch die Pfeile 35 angedeuteten Richtung.

Um das Medium von der Durchgangsöffnung 10a gezielt und dosiert zu den Durchbrüchen 25 und durch die Sickenflanke 21 zu leiten, schließen sich an der von der zweiten (in Fig. 5 verdeckten) Einzelplatte 10" abgewandten Außenseite der Sickenanordnung 14a erfindungsgemäße Leitungskanäle 27 an die Durchbrüche 25 in der ersten Sickenflanke 21 an. Die Leitungskanäle 27 sind zum Führen eines Mediums zwischen den Einzelplatten 10', 10" ausgebildet. Die Leitungskanäle 27 zwischen der Durchgangsöffnung 10a und den Durchbrüchen 25 in der ersten Sickenflanke 21 erstrecken sich jeweils von der Durchgangsöffnung 10a bis zu den Durchbrüchen 25 in der ersten Sickenflanke. An jeden der Durchbrüche 25 in der ersten Sickenflanke 21 schließt sich genau ein erfindungsgemäßer Leitungskanal 27 an.

Über die Durchbrüche 26 in der zweiten Sickenflanke 22 ist der Sickeninnraum 24 z. B. in Fluidverbindung mit dem - hier nicht dargestellten - aktiven Bereich der ersten Einzelplatte 10'. Der aktive Bereich kann sich z. B. am unteren Bildende anschließen. Um das Medium gezielt und dosiert aus dem Sickeninnenraum 24 zum aktiven Bereich zu leiten, schließen sich an der von der zweiten Einzelplatte 10" abgewandten Außenseite der Sickenanordnung 14a wiederum erfindungsgemäße Leitungskanäle 27 an die Durchbrüche 26 in der zweiten Sickenflanke 26 an. An jeden der Durchbrüche 65 in der zweiten Sickenflanke 22 schließt sich genau ein erfindungsgemäßer Leitungskanal 27 an.

In Fig. 5 erstrecken sich die Leitungskanäle 27 zwischen den Durchbrüchen 26 in der zweiten Sickenflanke 22 und dem aktiven Bereich jeweils von der den Durchbrüchen 26 in der zweiten Sickenflanke 22 bis zu einem Auslass oder Einlass 33 des jeweiligen Leitungskanals 27. Der Auslass oder Einlass 33 bildet also jeweils ein von der Sickenanordnung 14a abgewandtes Ende des Leitungskanals 27. Am Auslass oder Einlass 33 kann das Medium aus dem Leitungskanal 27 austreten und wechselt dabei auf die gegenüberliegende Oberfläche der Einzelplatte 10'. In Fig. 5 ist dies durch Pfeile 36 angedeutet. Gegebenenfalls kann der Medienfluss auch in der umgekehrten Richtung erfolgen, also entgegen der durch die Pfeile 36 angedeuteten Richtung. Der aktive Bereich der Einzelplatte 10' kann also durch die Einlässe oder Auslässe 33 mit dem Sickeninnenraum 24 in Fluidverbindung sein. Die Einlässe oder Auslässe 33 sind als Durchgangsöffnungen in der Einzelplatte 10' ausgebildet.

Die Leitungskanäle 27 sind einteilig oder einstückig mit der Einzelplatte 10' ausgebildet. Z. B. sind die Leitungskanäle 27 in die Einzelplatte 10' eingeformt, insbesondere eingeprägt. Gewöhnlich sind sowohl die Sickenanordnung 14a als auch die Leitungskanäle 27 einstückig mit der Einzelplatte 10' ausgebildet und in diese eingeprägt.

Die Leitungskanäle 27 weisen gewöhnlich jeweils Seitenflanken 28, 29 und ein Dach 30 auf. Von den Leitungskanälen 127 gemäß dem Stand der Technik (siehe Fign. 4a-c) unterscheiden sich die erfindungsgemäßen Leitungskanäle 27 dadurch, dass ihre Breite 31', 31" zur Sickenanordnung 14a hin jeweils wenigstens abschnittweise zunimmt. Die Breite 31', 31" der Leitungskanäle 27 wird dabei jeweils parallel zur Planflächenebene der Einzelplatte 10' auf halber Höhe des Leitungskanals 27 bestimmt. In Fig. 5 wird die Breite 31', 31" der Leitungskanäle 27 jeweils parallel zur Erstreckungsrichtung der Sickenanordnung 14a bestimmt, die entlang der x-Richtung 8 verläuft. Typischerweise wird die Breite 31', 31" der Leitungskanäle 27 somit senkrecht zur Flussrichtung des Mediums durch den Leitungskanal 27 bestimmt.

Fig. 5 ist entnehmbar, dass die Breite 31', 31" der Leitungskanäle 27 zur Sickenanordnung 14a hin wenigstens abschnittweise fächerförmig zunimmt. Die Breite 31', 31" der Leitungskanäle nimmt also wenigstens abschnittweise streng monoton zu, hier insbesondere linear. Beispielsweise beträgt die größte Breite des Leitungskanals 27 wenigstens das 1,5-Fache der geringsten Breite des Leitungskanals. Bei abgewandelten Ausführungsbeispielen beträgt die größte Breite des Leitungskanals 27 üblicherweise wenigstens 110 Prozent oder wenigstens 120 Prozent der geringsten Breite des Leitungskanals 27. In Fig. 5 erstreckt sich der bis an die Sickenanordnung 14a heranreichende Abschnitt der Leitungskanäle 27, in dem die Breite 31', 31" der Leitungskanäle 27 streng monoton zunimmt, jeweils über eine Länge, die wenigstens zwei Drittel oder wenigstens die Hälfte der Länge des jeweiligen Leitungskanals 27 beträgt.

Gleichzeitig sind die Leitungskanäle 27 in Fig. 5 derart ausgebildet, dass eine senkrecht zur Planflächenebene der Separatorplatte 10 oder der Einzelplatte 10' bestimmte Höhe 32', 32" der Leitungskanäle 27 zur Sickenanordnung 14a hin wenigstens abschnittweise abnimmt. Die Höhe 32', 32" der Leitungskanäle 27 bezeichnet dabei jeweils den Abstand des Daches 30 des Leitungskanals 27 von der Planflächenebene der Separatorplatte 10 oder der Einzelplatte 10'. In Fig. 5 erstreckt sich der bis an die Sickenanordnung 14a heranreichende Abschnitt der Leitungskanäle 27, in dem die Höhe 32', 32" der Leitungskanäle 27 streng monoton abnimmt, jeweils über eine Länge, die wenigstens zwei Drittel oder wenigstens die Hälfte der Länge des jeweiligen Leitungskanals 27 beträgt. Hier nimmt die Höhe 32', 32" der Leitungskanäle 27 wenigstens abschnittweise linear ab.

Beispielhaft sind in Fig. 5 zwei Schnittdarstellungen eines der Leitungskanäle 27 an zwei unterschiedlichen Stellen entlang des Verlaufs dieses Leitungskanals 27 dargestellt. Die Schnittebene ist jeweils parallel zur x-z-Ebene und damit senkrecht zur Planflächenebene der Separatorplatte 10 oder der Einzelplatte 10' ausgerichtet. Die Schnittebenen stehen senkrecht auf der Medienflussrichtung durch den Leitungskanal 27. Die durch die Gerade A-A gekennzeichnete Schnittebene ist in einem ersten Abstand von der Sickenanordnung 14a angeordnet, und die durch die Gerade B-B gekennzeichnete Schnittebene ist in einem zweiten Abstand von der Sickenanordnung 14a angeordnet, wobei der erste Abstand kleiner ist als der zweite Abstand. In der Schnittebene B-B weist der Leitungskanal 27 eine Breite 31" und eine Höhe 32" auf, und in der Schnittebene A-A weist der Leitungskanal 27 eine Breite 31" und eine Höhe 32" auf. Die Breite 31' ist größer als die Breite 31", und die Höhe 32' ist kleiner als die Höhe 31". Deutlich erkennbar sind in der Draufsicht der Fig. 5 die Radien an den jeweiligen Enden der Leitungskanäle, die sich zwischen der Sickenflanke 22 und der Schnittebene A-A sowie auf der von der Sickenanordnung 14a abgewandten Seite der Schnittebene B-B erstrecken.

Die Leitungskanäle 27 sind derart ausgebildet, dass ihre Querschnittsfläche wenigstens entlang des mittleren Drittels der Erstreckung des jeweiligen Leitungskanals im Wesentlichen konstant ist. Z. B. sind die Leitungskanäle 27 derart ausgebildet, dass sich ihre Querschnittsfläche wenigstens entlang des mittleren Drittels ihrer Erstreckung bezogen auf die größte Querschnittsfläche im mittleren Drittel höchstens um 20 Prozent ändert, vorzugsweise höchstens um 15 Prozent oder höchstens um 10 Prozent (die Querschnittsdarstellungen der Fig. 5 sind diesbezüglich nicht notwendigerweise maßstabsgetreu).

Um die mechanische Stabilität und die Elastizität der Sickenanordnung 14a möglichst wenig zu beeinträchtigen, reichen die Durchbrüche 25, 26 in den Sickenflanken 21, 22 senkrecht zur Planflächenebene der Separatorplatte 10 oder der Einzelplatte 10' bis zu einer Höhe, die höchstens 80 Prozent oder höchstens 70 Prozent der Höhe des Sickendaches 23 beträgt. Die Höhe des Sickendaches 23 bezeichnet dabei den Abstand des Sickendaches 23 von der Planflächenebene der Separatorplatte 10 oder der Einzelplatte 10'. Die Höhen sind jeweils im unverpressten Zustand der Separatorplatte 10 oder der Einzelplatte 10' zu bestimmen. Die Leitungskanäle 27 sind ferner derart ausgebildet, dass die größte Höhe ihres Daches 30 höchstens 85 Prozent oder höchstens 75 Prozent der Höhe der Sickenanordnung 14a beträgt, wobei die Höhen wiederum im unverpressten Zustand zu bestimmen sind.

In ebenen Bereichen 34 der Einzelplatte 10' zwischen zwei unmittelbar benachbarten Leitungskanälen 27 ist die Einzelplatte 10' stoffschlüssig mit der zweiten Einzelplatte 10" verbunden. Insbesondere sind die Einzelplatten 10', 10" der Separatorplatte 10 in den Bereichen 34 oder in einigen der Bereiche 34 bereichsweise durch Laserschweißverbindungen verbunden. Dies verhindert ein Auseinanderklaffen der Einzelplatten 10', 10" senkrecht zur Planflächenebene der Separatorplatte 10 beim Verpressen der Separatorplatte 10. Beim Verpressen der Separatorplatte 10 greifen die Verpressungskräfte typischerweise senkrecht zur Planflächenebene der Separatorplatte 10 im Bereich der Sickenanordnung 14a an.

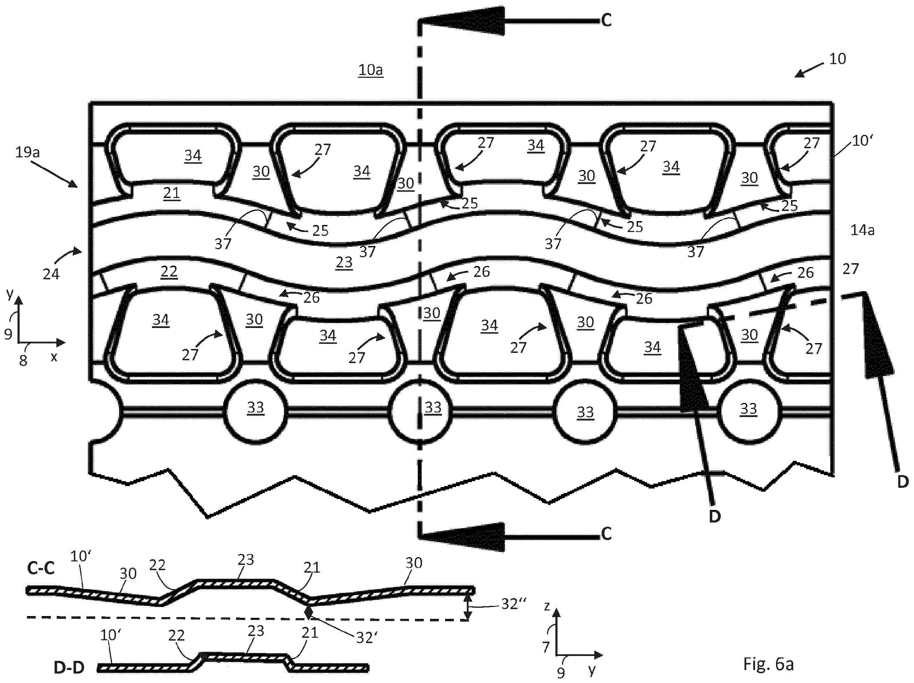

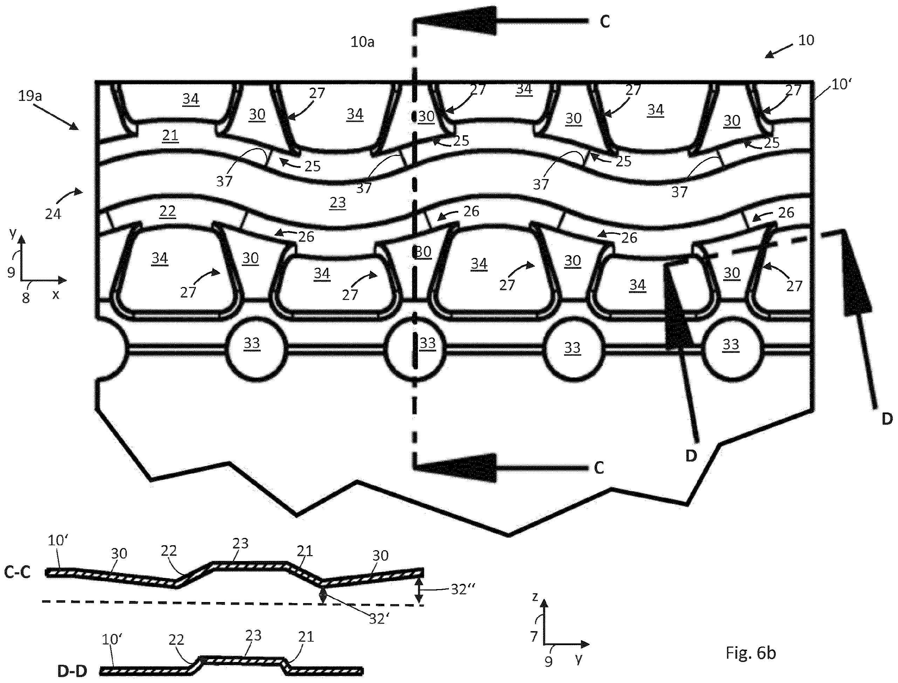

In Fig. 5 verläuft die Sickenanordnung 14a in gerader Richtung. Die Sickenanordnung 14a bzw. die Sickendurchführung 19a gemäß Fig. 6 unterscheidet sich von der Sickenanordnung 14a bzw. von der Sickendurchführung 19a gemäß Fig. 5 dadurch, dass die Sickenanordnung 14a gemäß Fig. 6, sowohl in Fig. 6a als auch in Fig. 6b, wellenartig verläuft, insbesondere nach Art einer Sinuskurve mit konstanter Amplitude. Bezüglich einer Geraden, die parallel zur x-Achse 8 ausgerichtet ist, weist die Sickenanordnung 14a gemäß Fig. 6 also einen periodischen Verlauf auf. Markierungen 37 sind dabei im Abstand einer halben Wellenlänge oder Periodenlänge angeordnet. Die Markierungen 37 bezeichnen die Wendepunkte in den Flanken 21, 22 der Sickenanordnung 14a, in denen die Durchbrüche 25, 26 angeordnet sind.

Wiederum sind in Fig. 6 in beiden Teilfiguren 6a und 6b je zwei Schnittdarstellungen der Sickendurchführung 19a gezeigt. Die durch die Gerade C-C bezeichnete Schnittebene ist parallel zur y-z-Achse ausgerichtet, und die durch die Gerade D-D bezeichnete Schnittebene ist senkrecht zur x-y-Ebene ausgerichtet und schließt mit der x-Richtung 8 einen Winkel von ca. 20 Grad ein. Die Schnittebene C-C verläuft entlang der Längsrichtung eines der Leitungskanäle 27. Erkennbar sind die zur Sickenanordnung 14a hin abschnittweise streng monoton abnehmende Höhe 32', 32" des Daches 30. Die Höhe des Leitungskanals 27 nimmt am Übergang in die Sickenflanke 21 ihren geringsten Wert 32' an. Die größte Höhe 32" des Kanaldaches 30 reicht bis zu einer Höhe, die hier ca. 70 Prozent der Höhe des Sickendaches 23 beträgt. Die Ausführungsformen der Teilfiguren 6a und 6b unterscheiden sich dadurch, dass sich in der Teilfigur 6a im Übergang zur Durchgangsöffnung 10a ein Bereich an die Leitungskanäle 27 anschließt, in dem die beiden Einzelplatten 10', 10" im Wesentlichen parallel zueinander verlaufen. Der Medienein- bzw. -austritt erfolgt somit über die gesamte Breite, auch zwischen den Fortsetzungen der Leitungskanäle 27. Ein solcher Übergang fehlt in der Ausführungsform der Teilfigur 6b, der Medienein- bzw. -austritt erfolgt somit unmittelbar in bzw. aus den Leitungskanälen 27. In beiden Ausführungsformen verläuft der Medienein- bzw. -austritt aus bzw. in die Durchgangsöffnung 10a zwischen den Einzelplatten 10', 10". Der Ein- bzw. Austritt in das bzw. aus dem Flowfield 17 erfolgt auf der dem Betrachter zugewandten Oberfläche der Separatorplatte 10 durch die Öffnungen 33.

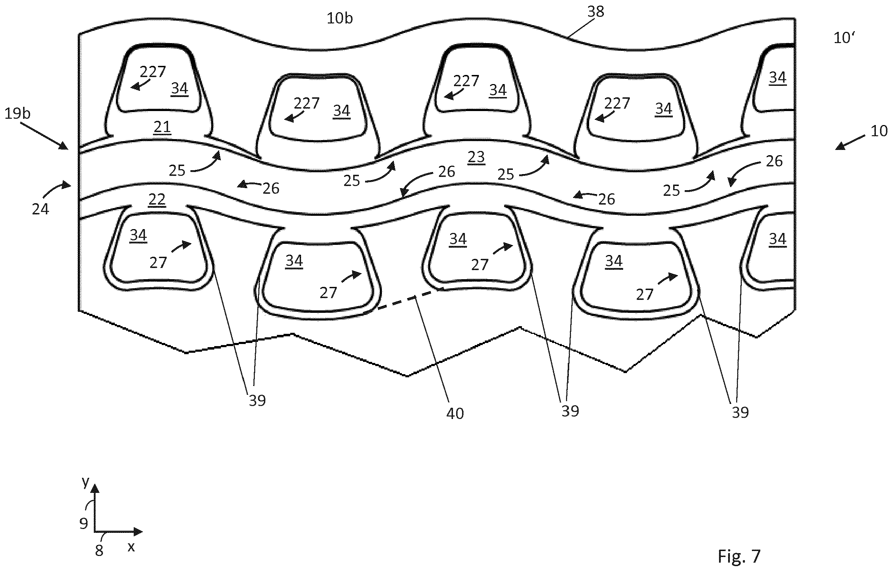

Die Sickendurchführung 19b gemäß Fig. 7 unterscheidet sich von der Sickendurchführung 19a gemäß Fig. 6 dadurch, dass eine Kante 38 der Einzelplatte 10', die an die Durchgangsöffnung 10a heranreicht und die Durchgangsöffnung 10a begrenzt, abschnittweise wellenartig verläuft, insbesondere nach Art einer Sinuskurve. Es verlaufen also sowohl die Sickenanordnung 14a und die Kante 38 wellenartig. Der wellenartig verlaufende Abschnitt der Sickenanordnung 14a und der wellenartig verlaufende Abschnitt der Kante 38 erstrecken sich jeweils über wenigstens zwei Wellenlängen. Im Beispiel der Fig. 7 weisen der wellenartig verlaufende Abschnitt der Sickenanordnung 14a und der wellenartig verlaufende Abschnitt der Kante 38 jeweils dieselbe Wellenlänge auf.

In den Beispielen der Fign. 5-6 sind sowohl an der der Durchgangsöffnung 10a zugewandten Sickenflanke 21 also auch an der von der Durchgangsöffnung 10a abgewandten Sickenflanke 22 jeweils erfindungsgemäße Leitungskanäle 27 angeordnet, die sich jeweils zur Sickenanordnung 14a hin wie beschrieben verbreitern. Bei abgewandelten Ausführungsformen der Separatorplatte 10, wie in Fig. 7 sind die erfindungsgemäßen Leitungskanäle 27 jeweils nur an einer der Sickenflanken 21, 22 angeordnet, im Beispiel der Fig. 7 an der Sickenflanke 22. Im Beispiel der Fig. 7 weisen die Leitungskanäle 227 an der Sickenflanke 21 eine abweichende Geometrie auf, bei der sich die Breite der Leitungskanäle 227 ausgehend von der Sickenflanke 21 zunimmt und die Höhe gleichzeitig zur Durchgangsöffnung 10b hin abnimmt. Ebenso ist es denkbar, dass nur einige der Sickenanordnungen 14a-h die erfindungsgemäßen Leitungskanäle 27 aufweisen, während andere der Sickenanordnungen 14a-h keine erfindungsgemäßen Leitungskanäle 27 aufweisen.

Abgesehen von der nicht-erfindungsgemäßen Geometrie des Leitungskanals 227 erfolgt die Führung des Mediums zwischen der Durchgangsöffnung 10b und dem Sickeninnenraum 24 wie in den vorbeschriebenen Ausführungsformen. Hier ist jedoch anders als in den vorbeschriebenen Ausführungsformen der Sickeninnenraum 24 über die Durchbrüche 26 in der zweiten Sickenflanke 22 in Fluidverbindung mit dem zuvor beschriebenen Hohlraum 18, der zwischen den Einzelplatten 10', 10" angeordnet und zum Durchführen eines Kühlmediums zwischen den Einzelplatten 10', 10" eingerichtet ist. Auf eine Öffnung 33 kann hier also verzichtet werden. Der Radius 39 führt zum Ende 37 des Leitungskanals 27 hin.

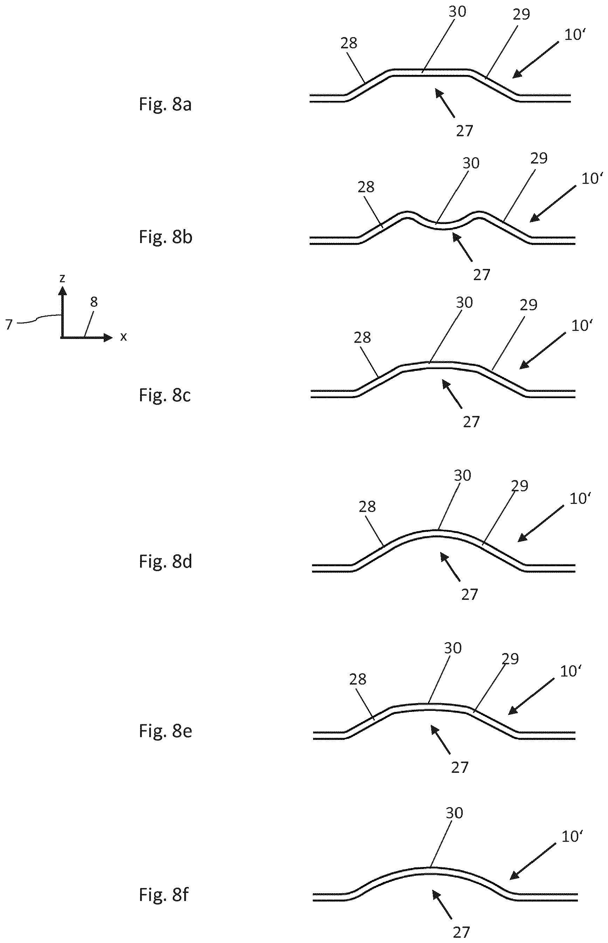

Fign. 8a-f zeigen Schnittdarstellungen verschiedener Ausführungsformen der erfindungsgemäßen Leitungskanäle 27 aus den Fign. 5-7. Die Schnittebenen sind jeweils senkrecht zur Planflächenebene der Einzelplatte 10' und senkrecht zur Medienflussrichtung durch den Leitungskanal 27 ausgerichtet. Die dargestellten Schnittebenen sind also jeweils derart ausgerichtet, dass sie die Querschnittsfläche des Leitungskanals 27 minimieren.

In Fig. 8a ist der Querschnitt des Leitungskanals 27 trapezartig geformt, mit geraden Seitenflanken 28, 29 und einem geraden Kanaldach 30. In Fig. 8b sind die Seitenflanken 28, 29 gerade und das Kanaldach 30 ist konkav nach innen gewölbt. In Fig. 8c sind die Seitenflanken 28, 29 gerade und das Kanaldach 30 untergliedert sich in eine Vielzahl kurzer gerader Abschnitte, so dass das Kanaldach 30 gegenüber den Seitenflanken 28, 29 abgeflacht ist. Fig. 8d zeigt gerade Seitenflanken 28, 29 und ein abgerundetes, konvex gewölbtes Kanaldach 30, wobei die Wölbung des Kanaldaches 30 glatt, d. h. ohne Kanten in die geraden Seitenflanken 28, 29 übergeht. Fig. 8e zeigt gerade Seitenflanken 28, 29 und ein konvex gewölbtes Kanaldach 30, wobei der Übergang der Wölbung des Kanaldaches 30 in die Seitenflanken 28, 29 Kanten aufweist. Fig. 8f zeigt einen vollständig abgerundeten Querschnitt. Das Kanaldach 30 überwölbt den Kanal konvex, ohne dabei Flanken aufzuweisen.

Auch die Sickenanordnungen können grundsätzlich Querschnitte wie in Figuren 8a-f aufweisen. Dem Leitungskanal 27 entspricht dann der Sickeninnenraum 24, den Seitenflanken 28, 29 die Sickenflanken 21, 22 und dem Kanaldach 30 das Sickendach 23. Die Höhen und meist auch die Breiten sind im Allgemeinen bei Sicken 14 größer als bei Leitungskanälen 27.

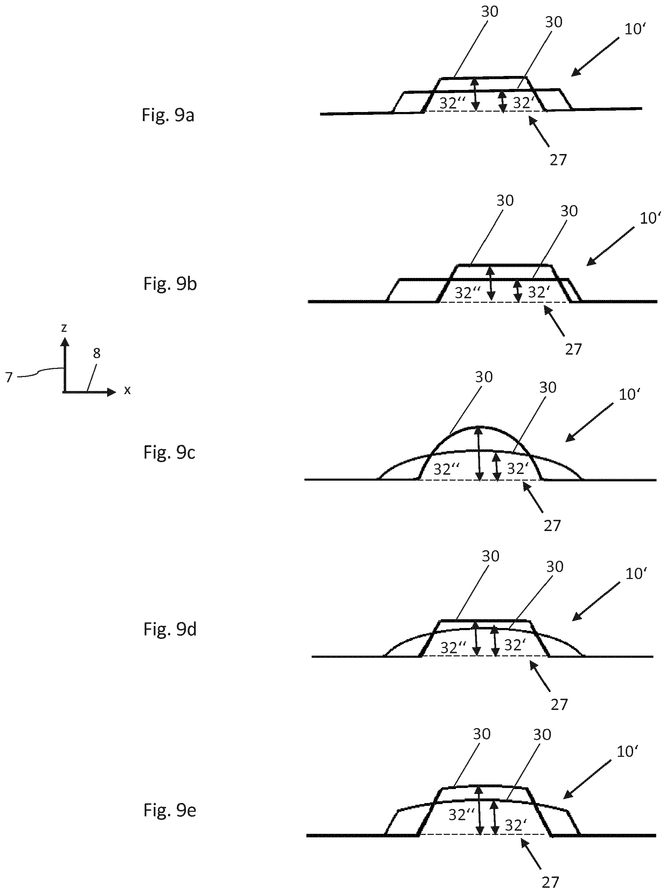

Fign. 9a-e zeigen wiederum Schnittdarstellungen verschiedener Ausführungsformen der erfindungsgemäßen Leitungskanäle 27 aus den Fign. 5-7. Die Schnittebenen sind erneut senkrecht zur Planflächenebene der Einzelplatte 10' und senkrecht zur Medienflussrichtung durch den Leitungskanal 27 ausgerichtet. Dabei zeigt jede der Fign. 9a-e zwei Schnitte desselben Leitungskanals in unterschiedlichen Abständen von der Sickenanordnung 14a. Dabei ist erkennbar, dass sich die geometrische Form des Querschnitts desselben Leitungskanals 27 entlang seiner Erstreckung verändern kann. Beispielsweise geht die Form des Querschnitts des Leitungskanals 27 in Fig. 9d von einer trapezförmigen Form in eine konvex gewölbte Form über. Fig. 9b zeigt, dass die Leitungskanäle 27 asymmetrisch ausgebildet sein können.

Eingezeichnet sind ferner die größte Höhe 32" und die kleinste Höhe 32' des jeweiligen Leitungskanals 27. Nur der Übersichtlichkeit halber nicht hervorgehoben sind die zugehörigen Breiten 31", 31' des Kanals 27. Der Querschnitt mit der größeren Breite hat jeweils einen geringeren Abstand von der Sickenanordnung 14a als der Querschnitt mit der geringeren Breite. Den Fign. 9a-e ist somit deutlich entnehmbar, dass sich die jeweils auf halber Höhe des Leitungskanals 27 bestimmte Breite des Leitungskanals 27 zur Sickenanordnung 14a hin vergrößert, während sich die Höhe 32', 32" des Leitungskanals 27 zur Sickenanordnung 14a hin verringert. Die Veränderung der Form des Querschnitts des Leitungskanals 27 erfolgt dabei jedoch jeweils in der Weise, dass sich die Querschnittsfläche entlang des Kanalverlaufs jeweils höchstens um 20 Prozent ändert, vorzugsweise jeweils um weniger als 10 Prozent.

## Patentansprüche

1. Separatorplatte (10) für ein elektrochemisches System (1), umfassend:
mindestens eine Durchgangsöffnung (10a-h) zur Ausbildung eines Medienkanals zur Medienzufuhr oder zur Medienableitung;
mindestens eine um die mindestens eine Durchgangsöffnung (10a-h) herum angeordnete Sickenanordnung (14a-h) zum Abdichten der Durchgangsöffnung (10a-h), wobei wenigstens eine der Flanken (21, 22) der Sickenanordnung (14a-h) wenigstens einen Durchbruch (25, 26) zum Durchleiten eines Mediums durch die Sickenflanke (21, 22) aufweist; und
mindestens einen Leitungskanal (27), der sich an einer Außenseite der Sickenanordnung (14a-h) an den Durchbruch (25, 26) in der Sickenflanke (21, 22) anschließt und der über den Durchbruch (25, 26) in der Sickenflanke (21, 22) in Fluidverbindung mit einem Sickeninnenraum (24) ist;
**dadurch gekennzeichnet,**
**dass** der Leitungskanal (27) derart ausgebildet ist, dass eine parallel zur Planflächenebene der Separatorplatte (10) bestimmte Breite (31) des Leitungskanals (27) zur Sickenanordnung (14a-h) hin wenigstens abschnittweise zunimmt.

2. Separatorplatte (10) nach Anspruch 1, **dadurch gekennzeichnet, dass** der Leitungskanal (27) derart ausgebildet ist, dass eine senkrecht zur Planflächenebene der Separatorplatte (10) bestimmte Höhe (32) des Leitungskanals (27) zur Sickenanordnung (14a-h) hin wenigstens abschnittweise abnimmt.

3. Separatorplatte (10) nach einem der vorhergehenden Ansprüche, **dadurch gekennzeichnet, dass** der Leitungskanal (27) derart ausgebildet ist, dass sich eine Querschnittsfläche des Leitungskanals (27) entlang der mittleren 25 Prozent der Erstreckung des Leitungskanals (27), vorzugsweise entlang des mittleren Drittels der Erstreckung des Leitungskanals (27) höchstens um 25 Prozent, vorzugsweise höchstens um 20 Prozent, besonders vorzugsweise höchstens um 15 Prozent ändert, wobei sich der Leitungskanal (27) von einem von der Sickenanordnung (14a-h) abgewandten Ende des Leitungskanals (27) bis zum Durchbruch (25, 26) in der Sickenflanke erstreckt.

4. Separatorplatte (10) nach einem der vorhergehenden Ansprüche, **dadurch gekennzeichnet, dass** der Leitungskanal (27) derart ausgebildet ist, dass die Breite (31) des Leitungskanals (27) entlang des Leitungskanals (27) zumindest über die an die Sickenflanke (21, 22) angrenzenden 60 Prozent der Länge des Leitungskanals monoton zunimmt, wobei sich der Leitungskanal (27) von einem von der Sickenanordnung (14a-h) abgewandten Ende des Leitungskanals (27) bis zum Durchbruch (25, 26) in der Sickenflanke (21, 22) erstreckt.

5. Separatorplatte (10) nach einem der vorhergehenden Ansprüche, **dadurch gekennzeichnet, dass** der Leitungskanal (27) derart ausgebildet ist, dass die Breite (31) des Leitungskanals (27) linear zunimmt.

6. Separatorplatte (10) nach einem der Ansprüche 2 bis 5, **dadurch gekennzeichnet, dass** der Leitungskanal (27) derart ausgebildet ist, dass die Höhe des Leitungskanals (27) entlang des Leitungskanals (27) monoton abnimmt, wobei sich der Leitungskanal (27) von einem von der Sickenanordnung (14a-h) abgewandten Ende des Leitungskanals (27) bis zum Durchbruch (25, 26) in der Sickenflanke (21, 22) erstreckt.

7. Separatorplatte (10) nach einem der vorhergehenden Ansprüche, **dadurch gekennzeichnet, dass** der Leitungskanal (27) derart ausgebildet ist, dass die Breite (31) des Leitungskanals (27) zumindest entlang der an die Sickenflanke (21, 22) angrenzenden 60 Prozent der Länge des Leitungskanals (27) wenigstens um 10 Prozent, vorzugsweise wenigstens um 20 Prozent zunimmt, wobei sich der Leitungskanal (27) von einem von der Sickenanordnung (14a-h) abgewandten Ende des Leitungskanals (27) bis zum Durchbruch (25, 26) in der Sickenflanke (21, 22) erstreckt.

8. Separatorplatte (10) nach einem der vorhergehenden Ansprüche, **dadurch gekennzeichnet, dass** im unverpressten Zustand der Sickenanordnung (14a-h) der Durchbruch (25, 26) in der Sickenflanke (21, 22) senkrecht zur Planflächenebene der Separatorplatte (10) bis zu einer Höhe reicht, die höchstens 80 Prozent, vorzugsweise höchstens 70 Prozent der Höhe der Sickenanordnung (14a-h) beträgt.

9. Separatorplatte (10) nach einem der vorhergehenden Ansprüche, **dadurch gekennzeichnet, dass** im unverpressten Zustand der Sickenanordnung (14a-h) der Leitungskanal (27) derart ausgebildet ist, dass ein Einlass oder Auslass des Leitungskanals (27), der ein von der Sickenanordnung (14a-h) abgewandtes Ende (33, 37, 38) des Leitungskanals (27) bildet, senkrecht zur Planflächenebene der Separatorplatte (10) bis zu einer Höhe reicht, die höchstens 90%, vorzugsweise höchstens 85 Prozent, vorzugsweise höchstens 75 Prozent der Höhe der Sickenanordnung (14a-h) beträgt.

10. Separatorplatte (10) nach einem der vorhergehenden Ansprüche, **dadurch gekennzeichnet, dass** die Separatorplatte (10) als Bipolarplatte mit zwei miteinander verbundenen Einzelplatten (10', 10") ausgebildet ist, wobei die Sickenanordnung (14a-h) und der Leitungskanal (27) in wenigstens einer der Einzelplatten (10', 10") ausgebildet sind.

11. Separatorplatte (10) nach Anspruch 10, **dadurch gekennzeichnet, dass** die Sickenanordnung (14a-h), der Leitungskanal (27) und die Einzelplatte (10', 10"), in der die Sickenanordnung (14a-h) und der Leitungskanal (27) ausgebildet sind, einteilig ausgebildet sind, wobei die Sickenanordnung (14a-h) und der Leitungskanal (27) in die Einzelplatte (10', 10") eingeformt sind, insbesondere eingeprägt sind.

12. Separatorplatte (10) nach einem der Ansprüche 10 oder 11, **dadurch gekennzeichnet, dass** die Einzelplatten (10', 10") einen Hohlraum (18) zum Durchführen eines Kühlmediums einschließen.

13. Separatorplatte (10) nach Anspruch 12, **dadurch gekennzeichnet, dass** der Hohlraum (18) zum Durchführen eines Kühlmediums mit dem Sickeninnenraum (24) in Fluidkommunikation steht.

14. Separatorplatte (10) nach einem der vorhergehenden Ansprüche, **dadurch gekennzeichnet, dass** der Durchbruch (25, 26) und der Leitungskanal (27) an einer von der Durchgangsöffnung (10a-h) der Separatorplatte (10) abgewandten und/oder an einer der Durchgangsöffnung (10a-h) der Separatorplatte (10) zugewandten Flanke (21, 22) der Sickenanordnung (14a-h) angeordnet sind.

15. Elektrochemisches System (1), insbesondere Brennstoffzellensystem, elektrochemischer Kompressor, Befeuchter für ein Brennstoffzellensystem oder Elektrolyseur mit einer Vielzahl von Separatorplatten (10, 11) nach einem der vorhergehenden Ansprüche, wobei die Durchgangsöffnungen (10a-h) der Separatorplatten (10, 11) wenigstens einen Medienkanal zur Medienzufuhr oder zur Medienableitung bilden.

## Claims

1. A separator plate (10) for an electrochemical system (1), comprising:
at least one passage opening (10a-h) for forming a media channel for feeding or discharging media;
at least one bead arrangement (14a-h) arranged around the at least one passage opening (10a-h) for the purpose of sealing said passage opening (10a-h), wherein at least one of the flanks (21, 22) of the bead arrangement (14a-h) comprises at least one opening (25, 26) for conducting a medium through the bead flank (21, 22); and
at least one guide channel (27), which is connected, on an exterior of the bead arrangement (14a-h), to the opening (25, 26) in the bead flank (21, 22) and is fluidically connected to a bead interior (24) via the opening (25, 26) in the bead flank (21, 22);
**characterised in that**
the guide channel (27) is designed such that a guide channel width (31) parallel to the flat surface plane of the separator plate (10) increases in the direction of the bead arrangement (14a-h) at least in sections.

2. The separator plate (10) according to claim 1, **characterised in that** the guide channel (27) is designed such that a height (32) of the guide channel (27) determined perpendicularly to the flat surface plane of the separator plate (10) decreases in the direction of the bead arrangement (14a-h) at least in sections.

3. The separator plate (10) according to either one of the preceding claims, **characterised in that** the guide channel (27) is designed such that a cross-sectional area of the guide channel (27) along the middle 25% of the extent of the guide channel (27), preferably along the middle third of the extent of the guide channel (27), changes by 25% at most, preferably by 20% at most, particularly preferably by 15% at most, wherein the guide channel (27) extends from an end of the guide channel (27) facing away from the bead arrangement (14a-h) to the opening (25, 26) in the bead flank.

4. The separator plate (10) according to any one of the preceding claims, **characterised in that** the guide channel (27) is designed such that the width (31) of the guide channel (27) increases monotonically along the guide channel (27), at least over the 60% of the length of the guide channel adjacent to the bead flank (21, 22), wherein the guide channel (27) extends from an end of the guide channel (27) facing away from the bead arrangement (14a-h) to the opening (25, 26) in the bead flank (21, 22).

5. The separator plate (10) according to any one of the preceding claims, **characterised in that** the guide channel (27) is designed such that the width (31) of the guide channel (27) increases linearly.

6. The separator plate (10) according to any one of claims 2 to 5, **characterised in that** the guide channel (27) is designed such that the height of the guide channel (27) decreases monotonically along the guide channel (27), wherein the guide channel (27) extends from an end of the guide channel (27) facing away from the bead arrangement (14a-h) to the opening (25, 26) in the bead flank (21, 22).

7. The separator plate (10) according to any one of the preceding claims, **characterised in that** the guide channel (27) is designed such that the width (31) of the guide channel (27) increases at least along the 60% of the length of the guide channel (27) adjacent to the bead flank (21, 22) at least by 10%, preferably at least by 20%, wherein the guide channel (27) extends from an end of the guide channel (27) facing away from the bead arrangement (14a-h) to the opening (25, 26) in the bead flank (21, 22).

8. The separator plate (10) according to any one of the preceding claims, **characterised in that**, in the uncompressed state of the bead arrangement (14a-h), the opening (25, 26) in the bead flank (21, 22) reaches, perpendicularly to the flat surface plane of the separator plate (10), as far as a height that is at most 80%, preferably at most 70% of the height of the bead arrangement (14a-h).

9. The separator plate (10) according to any one of the preceding claims, **characterised in that**, in the uncompressed state of the bead arrangement (14a-h), the guide channel (27) is designed such that an inlet or outlet of the guide channel (27), which forms an end (33, 37, 38) of the guide channel (27) facing away from the bead arrangement (14a-h), reaches, perpendicularly to the flat surface plane of the separator plate (10), as far as a height that is at most 90%, preferably at most 85%, preferably at most 75% of the height of the bead arrangement (14a-h).

10. The separator plate (10) according to any one of the preceding claims, **characterised in that** the separator plate (10) is formed as a bipolar plate with two individual plates (10', 10") connected to one another, wherein the bead arrangement (14a-h) and the guide channel (27) are formed in at least one of the individual plates (10', 10").

11. The separator plate (10) according to claim 10, **characterised in that** the bead arrangement (14a-h), the guide channel (27), and the individual plate (10', 10"), in which the bead arrangement (14a-h) and the guide channel (27) are formed, are formed in one piece, wherein the bead arrangement (14a-h) and the guide channel (27) are formed integrally in the individual plate (10', 10"), in particular are stamped therein.

12. The separator plate (10) according to any one of claims 10 to 11, **characterised in that** the individual plates (10', 10") enclose a hollow space (18) for the passage of a cooling medium.

13. The separator plate (10) according to claim 12, **characterised in that** the hollow space (18) for passage of a cooling medium is in fluid communication with the bead interior (24).

14. The separator plate (10) according to any one of the preceding claims, **characterised in that** the opening (25, 26) and the guide channel (27) are arranged on a flank (21, 22) of the bead arrangement (14a-h) facing away from the passage opening (10a-h) of the separator plate (10) and/or on a flank (21, 22) of the bead arrangement (14a-h) facing in the direction of the passage opening (10a-h) of the separator plate (10).

15. An electrochemical system (1), in particular a fuel cell system, electrochemical compressor, humidifier for a fuel cell system, or electrolyser, comprising a plurality of separator plates (10, 11) according to any one of the preceding claims, wherein the passage openings (10a-h) of the separator plates (10, 11) form at least one media channel for feeding or discharging media.

## Revendications

1. Plaque de séparateur (10) pour un système électrochimique (1), comprenant :
au moins une ouverture de passage (10a-h) pour la réalisation d'un canal de fluide pour l'introduction du fluide ou pour la dérivation du fluide ;
au moins un arrangement de nervures (14a-h) disposé autour de l'au moins une ouverture de passage (10a-h) pour l'étanchéification de l'ouverture de passage (10a-h), au moins un des flancs (21, 22) de l'arrangement de nervures (14a-h) comprenant au moins une percée (25, 26) pour le passage d'un fluide à travers le flanc de nervure (21, 22) ; et
au moins un canal de guidage (27) qui se raccorde à un côté externe de l'arrangement de nervures (14a-h) au niveau de la percée (25, 26) dans le flanc de nervure (21, 22) et qui est en liaison fluidique avec un espace interne de la nervure (24) par l'intermédiaire de la percée (25, 26) dans le flanc de nervure (21, 22) ;
**caractérisée en ce que**
le canal de guidage (27) est conçu de façon à ce qu'une largeur (31) déterminée du canal de guidage (27), parallèle au plan de surface plane de la plaque de séparateur (10) augmente au moins à certains endroits en direction de l'arrangement de nervures (14a-h).

2. Plaque de séparateur (10) selon la revendication 1, **caractérisée en ce que** le canal de guidage (27) est conçu de façon à ce qu'une hauteur (32) déterminée du canal de guidage (27), perpendiculaire au plan de surface plane de la plaque de séparateur (10), diminue au moins à certains endroits en direction de l'arrangement de nervures (14a-h).

3. Plaque de séparateur (10) selon l'une des revendications précédentes, **caractérisée en ce que** le canal de guidage (27) est conçu de façon à ce qu'une surface de section transversale du canal de guidage (27) varie le long des 25 % centraux de l'extension du canal de guidage (27), de préférence le long du tiers central de l'extension du canal de guidage (27), de 25 % maximum, de préférence de 20 % maximum, plus particulièrement de préférence de 15 % maximum, le canal de guidage (27) s'étendant d'une extrémité opposée à l'arrangement de nervures (14a-h) du canal de guidage jusqu'à la percée (25, 26) dans le flanc de la nervure.

4. Plaque de séparateur (10) selon l'une des revendications précédentes, **caractérisée en ce que** le canal de guidage (27) est conçu de façon à ce que la largeur (31) du canal de guidage (27) augmente de manière monotone le long du canal de guidage (27) au moins sur les 60 %, adjacents au flanc de la nervure (21, 22), de la longueur du canal de guidage, le canal de guidage (27) s'étendant d'une extrémité, opposée à l'arrangement de nervures (14a-h), du canal de guidage (27), jusqu'à la percée (25, 26) dans le flanc de la nervure (21, 22).

5. Plaque de séparateur (10) selon l'une des revendications précédentes, **caractérisée en ce que** le canal de guidage (27) est conçu de façon à ce que la largeur (31) du canal de guidage (27) augmente de manière linéaire.

6. Plaque de séparateur (10) selon l'une des revendications 2 à 5, **caractérisée en ce que** le canal de guidage (27) est conçu de façon à ce que la hauteur du canal de guidage (27) diminue de manière monotone le long du canal de guidage (27), le canal de guidage (27) s'étendant d'une extrémité, opposée à l'arrangement de nervures (14a-h), du canal de guidage (27) jusqu'à la percée (25, 26) dans le flanc de nervure (21, 22).

7. Plaque de séparateur (10) selon l'une des revendications précédentes, **caractérisée en ce que** le canal de guidage (27) est conçu de façon à ce que la largeur (31) du canal de guidage (27) augmente, au moins le long des 60 %, adjacents au flanc de nervure (21, 22), de la longueur du canal de guidage (27), d'au moins 10 %, de préférence d'au moins 20 %, le canal de guidage (27) s'étendant d'une extrémité, opposée à l'arrangement de nervures (14a-h), du canal de guidage (27) jusqu'à la percée (25, 26) dans le flanc de nervure (21, 22).

8. Plaque de séparateur (10) selon l'une des revendications précédentes, **caractérisée en ce que**, dans l'état non compressé de l'arrangement de nervures (14a-h), la percée (25, 26) dans le flanc de nervure (21, 22) arrive, perpendiculairement au plan de surface plane de la plaque de séparateur (10), jusqu'à une hauteur qui représente 80 % maximum, de préférence 70 % maximum de la hauteur de l'arrangement de nervures (14a-h).

9. Plaque de séparateur (10) selon l'une des revendications précédentes, **caractérisée en ce que**, dans l'état non compressé de l'arrangement de nervures (14a-h), le canal de guidage (27) est conçu de façon à ce qu'une entrée ou une sortie du canal de guidage (27), qui forme une extrémité (33, 37, 38), opposée à l'arrangement de nervures (14a-h), du canal de guidage (27), arrive, perpendiculairement au plan de surface plane de la plaque de séparateur (10), jusqu'à une hauteur qui représente 90 % maximum, de préférence 85 % maximum, de préférence 75 % maximum de la hauteur de l'arrangement de nervures (14a-h).

10. Plaque de séparateur (10) selon l'une des revendications précédentes, **caractérisée en ce que** la plaque de séparateur (10) est conçue comme une plaque bipolaire avec deux plaques individuelles (10', 10") reliées entre elles, l'arrangement de nervures (14a-h) et le canal de guidage (27) étant disposés dans au moins une des plaques individuelles (10', 10").

11. Plaque de séparateur (10) selon la revendication 10, **caractérisée en ce que** l'arrangement de nervures (14a-h), le canal de guidage (27) et la plaque individuelle (10', 10"), dans laquelle l'arrangement de nervures (14a-h) et le canal de guidage (27) sont disposés, sont réalisés d'une seule pièce, l'arrangement de nervures (14a-h) et le canal de guidage (27) étant moulés, plus particulièrement estampés, dans la plaque individuelle (10', 10").

12. Plaque de séparateur (10) selon la revendication 10 ou 11, **caractérisée en ce que** les plaques individuelles (10', 10") incluent une cavité (18) pour le passage d'un fluide de refroidissement.

13. Plaque de séparateur (10) selon la revendication 12, **caractérisée en ce que** la cavité (18) est en communication fluidique avec l'intérieur de la nervure (24) pour le passage du fluide de refroidissement.

14. Plaque de séparateur (10) selon l'une des revendications précédentes, **caractérisée en ce que** la percée (25, 26) et le canal de guidage (27) sont disposés au niveau d'un flanc (21, 22), opposé à l'ouverture de passage (10a-h) de la plaque de séparateur (10) et/ou orienté vers l'ouverture de passage (10a-h) de la plaque de séparateur (10), de l'arrangement de nervures (14a-h).

15. Système électrochimique (1), plus particulièrement système de cellule à combustible, compresseur électrochimique, humidificateur pour un système de cellule à combustible ou électrolyseur avec une pluralité de plaques de séparateur (10, 11) selon l'une des revendications précédentes, les ouvertures de passage (10a-h) des plaques de séparateur (10, 11) formant au moins un canal de fluide pour l'introduction du fluide ou pour la dérivation du fluide.
